# EUROPEAN PATENT APPLICATION

(11) **EP 4 789 738 A1**
(43) Date of publication of application: **12.08.2026**
(21) Application number: 26153257.6
(22) Date of filing: 21.01.2026
(51) Int. Cl.: A63F 13/54, A63F 13/67, A63F 13/215, A63F 13/35, A63F 13/79

(54) **ADAPTIVE AUDIO LEVERAGING GENERATIVE ARTIFICIAL INTELLIGENCE FOR USER-DEFINED SOUND CLASS TRANSFORMATION**

(30) Priority: 05.02.2025 US 202519046061
(71) Applicant: Microsoft Technology Licensing, LLC, Redmond, WA 98052 (US)
(72) Inventor: PATANA, TERO JUHANI, Redmond, 98052 (US); GARCIA, ERIK ROBERTO, Redmond, 98052 (US); WANG, SHUOQI SCOTT, Redmond, 98052 (US)
(74) Representative: CMS Cameron McKenna Nabarro Olswang LLP

(57) **Abstract**

Technology is disclosed for adapting a dynamic audio stream to modify sounds of a sound class based on user preferences in systems including gaming systems. A user may provide, via a graphical user interface, at least one sample instance of a sound class and a transformation type. The system may use the instances of the sound class to train a generative artificial intelligence (AI) model to identify instances of the sound class in a dynamic audio stream (e.g., from game instances on a gaming instance) and to transform the instances of the sound class with the transformation type in the dynamic audio stream. The output stream from the generative AI model can be used as the audio output. As the user hears other instances of the sound class in the output audio stream, the user can provide feedback to tune the generative AI model for the user-specific instances.

## Description

### CROSS REFERENCE

This application is related to U.S. Patent Application, titled "ADAPTIVE AUDIO BASED ON USER PREFERENCES THROUGH LEVERAGING GENERATIVE ARTIFICIAL INTELLIGENCE," filed concurrently, Attorney Docket No. 502071-US01, which is incorporated by reference in its entirety herein.

### TECHNICAL FIELD

Aspects of the disclosure are related to the field of computing software and hardware and, in particular, to adaptive audio.

### BACKGROUND

It is commonly understood that auditory triggers can impact human emotions and, in the case of technology, the user experience of certain products and services. Popularly, many people seek out autonomous sensory meridian response (ASMR) content online because it elicits a desirable physiological sensation with up to 15% of adults being capable of experiencing it. On the other side of the spectrum, almost just as many people in the world can experience misophonia, which is an intolerance to certain repetitive sounds (e.g. chewing, coughing, slurping). Even more extreme than misophonia, those with conditions such as phonophobia or Post-Traumatic Stress Disorder (PTSD) can suffer from significant psychological distress when in the presence of certain auditory triggers.

Those who suffer from PTSD, misophonia, and phonophobia exacerbated by auditory triggers have difficulty experiencing certain audio content. In the specific scenario of gaming, where the objective is to elicit an emotional response, this can lead to adverse reactions to common game sounds such as gunshots, explosions, and unanticipated sounds (e.g., horror genre). Even more innocuous environmental but repetitive sounds such as waterfalls, wind, rain, insects, animals, and other nature-type sounds may cause issues for some people. Sounds that are auditory triggers for certain individuals can be so detrimental to the user experience that they no longer wish to play the game or even an entire portfolio of similar games in the future.

Currently, there is no straightforward way to avoid these sounds for those afflicted individuals. Accordingly, improvements are needed.

### OVERVIEW

Technology is disclosed herein that leverages a generative artificial intelligence (AI) model to identify instances of a sound class and then selectively manipulate that audio content based on user preference in order to achieve the ideal experience for the user. The user may define or select the sound class and provide sample instances of the sound class to initially train the model for transforming the audio. The generative AI model is trained on relevant content (e.g., gaming content for gaming uses) to better understand and differentiate between audio content such as different types of background noise, action sequences, dialogue, environmental sound effects, and the like. The user is able to instruct this trained model to identify target audio content and then attenuate, strengthen, remove, alter, or fully replace the content before it is heard. While using the model, the user may provide feedback that is used to fine-tune the model.

A system of one or more computers can be configured to perform particular operations or actions by virtue of having software, firmware, hardware, or a combination of them installed on the system that in operation cause the system to perform the actions. One or more computer programs can be configured to perform particular operations or actions by virtue of including instructions that, when executed by data processing apparatus, cause the apparatus to perform the actions. One general aspect includes a computer-implemented method for training a user-defined generative AI audio transformation model and using it to transform dynamic audio streams. The method may be performed by a gaming system or device. The gaming system may receive a user request to transform a sound class with a transformation type, where the user request includes the transformation type, and at least one sample instance of the sound class, and where the user request applies to all gaming instances instantiated by the gaming system. The gaming system may train a generative artificial intelligence (AI) model to identify instances of the sound class using the at least one sample instance of the sound class. The gaming system instantiates a gaming instance of a digital game, where the gaming instance includes a dynamic audio stream. The gaming system generates, based on the user request and in response to the instantiating, a prompt for the generative AI model, where the prompt is designed to instruct the generative AI model to process the dynamic audio stream to transform the instances of the sound class in the dynamic audio stream with the transformation type. The gaming system serves an output stream from the generative AI model as the audio for the gaming instance. Other embodiments of this aspect include corresponding computer systems, apparatus, and computer programs recorded on one or more computer storage devices, each configured to perform the actions of the methods.

Implementations may include one or more of the following features. In some embodiments, the gaming system receives indications of missed instances of the sound class in the audio from a user during the gaming instance. In response, the gaming system fine-tunes the generative AI model based on the indications.

In some embodiments, the transformation type includes a replacement transformation such that the generative AI model replaces the instances of the sound class in the dynamic audio stream with a different sound. In some embodiments, the transformation type includes an enhancement transformation such that the generative AI model increases the strength of the instances of the sound class in the dynamic audio stream. In some embodiments, the transformation type includes an isolation transformation such that the generative AI model isolates the instances of the sound class in the dynamic audio stream from other sounds in the dynamic audio stream. In some embodiments, the transformation type includes a removal transformation such that the generative AI model removes the instances of the sound class from the dynamic audio stream.

In some embodiments, the user logs into a globally accessible user account on a second gaming device and requests another gaming instance. The second gaming instance may include a second dynamic audio stream. The second gaming device obtains the generative AI model and generates, based on the user request and in response to the instantiating the second gaming instance, a second prompt for the generative AI model, where the second prompt is designed to instruct the generative AI model to process the second dynamic audio stream to transform instances of the sound class in the second dynamic audio stream with the transformation type. The second gaming device serves the output stream from the generative AI model as the audio for the second gaming instance.

In some embodiments, the gaming system digitizes the dynamic audio stream into digitized segments and provides the digitized segments to the generative AI model for processing based on the prompt.

In some embodiments, the user provides feedback that indicates an issue in the output stream associated with at least one digitized segment. The gaming system generates, based on the feedback, a second prompt for the generative AI model, where the second prompt is designed to instruct the generative AI model to adjust the output stream based on the feedback, and where the prompt identifies the at least one digitized segment.

In some embodiments, the size of the digitized segments is selected based at least in part on a thoroughness value selected by the user.

In some embodiments, the generative AI model is trained to deliver the output stream at a transmission rate corresponding to the transmission rate of the dynamic audio stream.

In some embodiments, the gaming system postprocesses the output stream to smooth the transmission rate of the output stream to match the transmission rate of the dynamic audio stream.

In some embodiments, the generative AI model is a first generative AI model of a plurality of generative AI models, each trained to identify a unique sound class of a plurality of sound classes. The gaming system may receive a second user selection of a second sound class and a second transformation type. The gaming system may generate, based on the second user selection and in response to the instantiating, a second prompt for a second generative AI model, where the prompt is designed to instruct the second generative AI model to process the dynamic audio stream to transform instances of the second sound class in the dynamic audio stream with the second transformation type, and where the second generative AI model is pretrained to identify the instances of the second sound class. The gaming system may provide the output stream from the second generative AI model to the first generative AI model as the dynamic audio stream such that the second generative AI model process the stream first, and the first generative AI model processes the stream second such that the models are stacked.

In some embodiments, the second generative AI model is trained based on a user request. The gaming system trains the second generative AI model to identify instances of the second sound class using the sample instances of the second sound class provided by the user. The gaming device instantiates a second gaming instance of a digital game and generates, based on the user request and in response to the instantiating, a second prompt for the generative AI model, where the second prompt is designed to instruct the generative AI model to process the second dynamic audio stream to transform the instances of the sound class in the second dynamic audio stream with the transformation type. The gaming system generates, based on the second user request and in response to the instantiating, a third prompt for the second generative AI model, where the third prompt is designed to instruct the second generative AI model to process the output of the first generative AI model to transform the instances of the second sound class in the output of the first generative AI model with the second transformation type. In this way, two pre-trained models, two user-trained models, or one user-trained and one pre-trained model can be stacked. The gaming system serves the output stream from the second generative AI model as the audio for the second gaming instance. Implementations of the described techniques may include hardware, a method or process, or computer software on a computer-accessible medium.

This Overview is provided to introduce a selection of concepts in a simplified form that are further described below in the Detailed Description. It may be understood that this Overview is not intended to identify key features or essential features of the claimed subject matter, nor is it intended to be used to limit the scope of the claimed subject matter.

### BRIEF DESCRIPTION OF THE DRAWINGS

Many aspects of the disclosure may be better understood with reference to the following drawings. The components in the drawings are not necessarily to scale, emphasis instead being placed upon clearly illustrating the principles of the present disclosure. Moreover, in the drawings, like reference numerals designate corresponding parts throughout the several views. While several embodiments are described in connection with these drawings, the disclosure is not limited to the embodiments disclosed herein. On the contrary, the intent is to cover all alternatives, modifications, and equivalents.
FIG. 1 illustrates a system that leverages generative AI to transform instances of a sound class in a dynamic audio stream, according to various embodiments.
FIG. 2A illustrates additional details of the system of FIG. 1, according to various embodiments.
FIG. 2B illustrates an example sound class instance transformation, according to various embodiments.
FIG. 3 illustrates additional details of the system of FIG. 1, according to various embodiments.
FIG. 4 illustrates a method of processing a dynamic audio stream with pre-trained generative AI models, according to various embodiments.
FIG. 5 illustrates a method of training a user-specific generative AI model for processing a dynamic audio stream, according to various embodiments.
FIG. 6 illustrates an exemplary graphical user interface for configuring dynamic audio stream processing, according to various embodiments.
FIG. 7 illustrates another exemplary graphical user interface for configuring dynamic audio stream processing, according to various embodiments.
FIG. 8A illustrates a swim diagram of data flow for configuring dynamic audio stream processing with pretrained generative AI models, according to various embodiments.
FIG. 8B illustrates a swim diagram of data flow for configuring dynamic audio stream processing and training generative AI models, according to various embodiments.
FIG. 8C illustrates a swim diagram of data flow for using user-tuned generative AI models stored in a global user account across gaming devices, according to various embodiments.
FIG. 9 illustrates a computing system suitable for implementing the various operational environments, architectures, processes, scenarios, and sequences discussed below with respect to the other Figures.

### DETAILED DESCRIPTION

Technology is disclosed herein that leverages a generative artificial intelligence (AI) model to identify instances of a sound class and then selectively manipulate that audio content based on user preference in order to achieve the ideal experience for the user. The generative AI model is trained on relevant content (e.g., gaming content for gaming uses) to better understand and differentiate between audio content such as different types of background noise, action sequences, dialogue, environmental sound effects, and the like. The user is able to instruct this trained model to identify target audio content and then attenuate, strengthen, remove, alter, or fully replace the content before it is heard.

For use with game content, the generative AI model can be pre-trained in order to present the user (e.g., player) with a foundational preset of what the model should detect and manipulate. In some embodiments, the generative AI model may be trained on-the-fly by the user who can upload one or more instances of the sound class as well as the transformation type to train the generative AI model. Further, during use, the user may identify instances of the sound class that slipped through the generative AI model to fine-tune the generative AI model for the particular user. The pre-trained or user-trained generative AI models may be stacked such that more than one sound class may be manipulated in the dynamic audio stream by a combination of generative AI models.

The generative AI model can be trained to identify and categorize any audio content, and it can also manipulate the audio content in a range of ways (e.g., attenuate, strengthen, remove, alter, replace). In other words, the generative AI model can be used for different purposes for different user groups. The generative AI model can be used as an accessibility tool to remove triggering or offensive sounds for those with auditory-based disabilities. The generative AI model can be utilized by players who are deaf or hard of hearing to strengthen specific sounds in order to improve their perception of critical game audio. It can also be used by competitive players who want to isolate certain in-game sounds to gain an edge over their opponents. It can additionally be used for transitory auditory contexts where a player needs to temporarily focus on something specific such as dialogue, environmental cues, or the like. It is important to note that because all of these use cases utilize a generative AI model at the platform or device layer and not the game layer, these features do not require to be built into each game on a case-by-case basis for each game developer. Furthermore, while gaming is the exemplary use case discussed throughout this disclosure, the generative AI models may be used in many use cases beyond the gaming example.

In practice, the implementations may be limited or expanded based on available compute for the device performing the transformation. In other words, depending on the computing power of the AI chip being utilized for the generative AI models, the training speed, detection granularity, and manipulation range would all be affected. In the case of a gaming system such as MICROSOFT XBOX, it is possible to leverage upcoming AI compute for future consoles and, in some embodiments, cloud servers, in order to quickly and accurately detect the target audio content and manipulate it in many ways. If, however, the user were using a compatible wireless headset, but was not connected to either an AI-capable console or cloud server, an onboard AI chip may be restricted to detecting a limited list of sound classes and transformation types. In other words, there may be lower compute options such as attenuation, strengthening, removal, or dynamically tuning the equalizer settings for desired audio frequencies because the compute required to replace or transform the content may not be available. However, these limited options may still be desirable for a user for many purposes such as trigger avoidance or selective noise cancellation.

Additionally, if active noise cancellation (ANC) is available on the audio device, the disclosed audio transformation can further enhance the standard ANC filtering by using the generative AI model to concentrate it to specific frequencies or audio sources instead of generic full spectrum ANC which is common in current industry implementations. This would increase the efficiency of the ANC feature by allowing it to focus on specific audio sources based on the generative AI model's judgment of what sounds are appropriate to attenuate or based on the user specifically instructing the model to attenuate certain sounds.

Advantageously, the disclosed systems and methods provide for user-selected and tuned dynamic audio manipulation across software applications on a system-wide basis. Software application developers (e.g., game developers) need not program specific settings and options into particular games. Instead, a user can make a global setting that impacts all audio emitting from the device. Further, the user can have the option to a have a global user setting that ensures the user's audio on any device will conform to and use the user-tuned generative AI models the user configured. In addition to limiting resource use over software-specific implementation, the disclosed technology provides for a more consistent experience for users regardless of the software application or device being used. Implementing this system-wide option improves resource usage including memory and computational resources. Memory usage is reduced over software application-specific implementations because code and models for manipulating audio in each software application are not needed. Further, computational resources are limited because one, well-developed solution is provided rather than relying on multiple different types of solutions that may be poorly implemented.

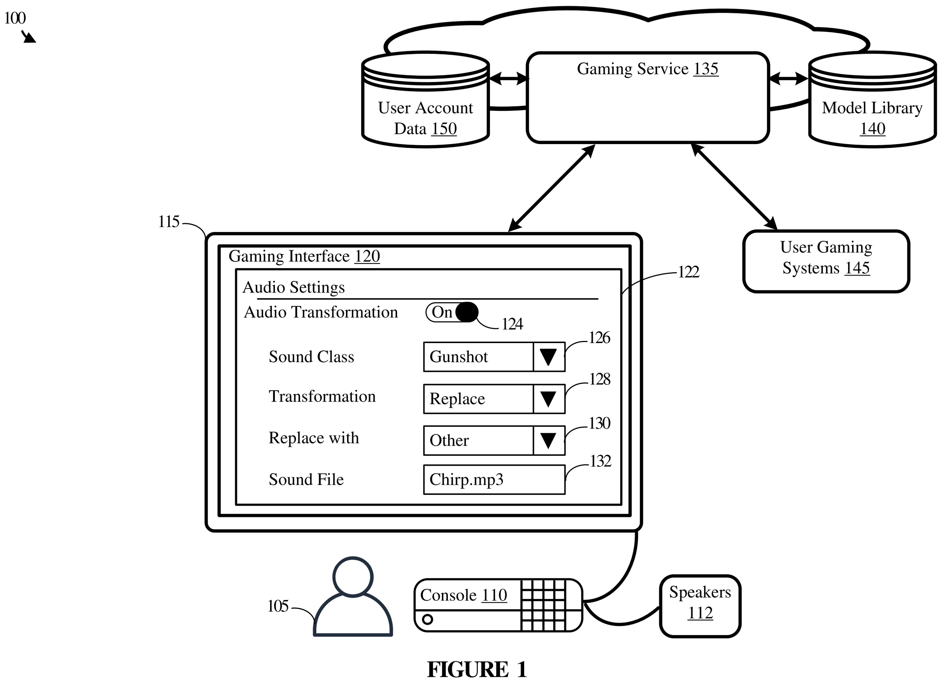

Turning now to the figures, **FIG. 1** illustrates gaming environment 100. Gaming environment 100 includes user 105, console 110, speakers 112, display 115, gaming service 135, user account data 150, model library 140, and user gaming systems 145. While a gaming environment is used as an exemplary system, the technology described for dynamic audio manipulation may be used in other types of systems and environments.

Console 110 may be any gaming console that includes display 115 and speakers 112. In some embodiments, speakers 112 and display 115 are integrated into console 110 (e.g., a handheld or mobile device). User 105 plays digital games using console 110. The digital games include dynamic audio streams which are audibly provided (i.e., served) to user 105 via speakers 112. Speakers 112 may include standalone speakers or integrated speakers. Speakers 112 may be wearable (e.g., headphones, earbuds, or the like).

Display 115 may be integrated or standalone. Display 115 may be any suitable display including a touchscreen. Display 115 may provide gaming interface 120 (e.g., a graphical user interface). Display 115 provides the visual experience for user 105 during a gaming instance, and provides other graphical user interface (GUI) experiences to user 105.

Audio settings 122 is depicted in gaming interface 120 in FIG. 1. Audio settings 122 may allow user 105 to select settings used across all gaming instances, regardless of the digital game being played. Audio settings 122 includes audio transformation option 124. Audio transformation option 124 allows user 105 to turn audio transformations on and off. Once on, options may be available for selecting the particular user settings. For example, user 105 may select the sound class using sound class dropdown 126. Sound class dropdown 126 may provide options for pre-trained generative AI models that are already trained to identify instances of a particular sound class. User 105 may select the transformation type using transformation type dropdown 128. Transformation types may include replace, remove, isolate, and enhance. The pre-trained generative AI models may be trained specifically to perform a particular transformation type in some embodiments. A replacement transformation may be used for the generative AI model to replace the instances of the sound class in the dynamic audio stream with a different sound. In some embodiments, the replacement sound may be selected by the user either as a pre-trained option or by the user uploading a particular sound they wish to use. An enhancement transformation may be used for the generative AI model to increase the strength of the instances of the sound class in the dynamic audio stream. For example, the sound class instances may be louder, a different frequency, or the like. An isolation transformation may be used for the generative AI model to isolate the instances of the sound class in the dynamic audio stream from other sounds in the dynamic audio stream. For example, rather than enhancing the sound class by increasing the strength, other sounds may be reduced by reducing their strength (e.g., volume or frequency). A removal transformation may be used for the generative AI model to remove the instances of the sound class from the dynamic audio stream. Audio settings 122 depicts that the user has selected the "gunshot" sound class and the "replace" transformation type. Replacement dropdown 130 may provide a list of replacement sounds that user 105 may select from. Replacement dropdown 130 may include options for which the pre-trained generative AI models have been trained on. In some embodiments, an "other" option (as selected in audio settings 122 in FIG. 1) may allow user 105 to provide an audio file as a sample instance of a replacement sound using sound file box 132. As depicted in FIG. 1, user 105 has selected to replace gunshots with the sound in sound file "chirp.mp3."

Gaming service 135 may be a cloud-based gaming service that may provide functionality to allow user 105 to log in with a user account, experience multi-user gaming with other users on user gaming systems 145, access downloadable gaming content, and the like. Gaming service 135 may authenticate user 105 and utilize user account data 150 for providing functionality to user 105 based on user 105 associated profile information in user account data 150. User account data 150 may include user profiles for all users including user 105 that have an account accessed via a login. Gaming service 135 may, based on the selections in audio settings 122, identify a pre-trained generative AI model in model library 140 that is trained appropriately. Further, once selected, the selections in audio settings 122 may be saved to user account data 150 and/or the selected pre-trained generative AI model may be saved to user account data 150 for user 105.

Model library 140 may include many pre-trained generative AI models, each trained to identify instances of a unique sound class in a dynamic audio stream. Baseline training may be used that is appropriate for the given implementation. For example, pre-trained generative AI models for use in gaming systems may be trained using dynamic audio streams from gaming audio files. Each pre-trained generative AI model may be trained using instances of the given sound class to identify the instances in future audio streams. For example, a pre-trained generative AI model may be trained using multiple instances of gunshots to identify gunshots. Other loud, sudden sound files may further be used as negative samples to train the generative AI model. In some embodiments, the pre-trained generative AI models are further trained using a specific transformation type. Accordingly, there may be two separate pre-trained generative AI models that are trained to identify gunshots. One of them may be trained to remove the gunshots (i.e., a removal transformation), and the other may be trained to replace the gunshots with a different audio file clip or sample. Gaming service 135 may receive user 105 selections in audio settings 122 and search model library 140 for the corresponding pre-trained generative AI model. Further, gaming service 135 may provide available selections for sound class dropdown 126, transformation type dropdown 128, and replacement dropdown 130 in audio settings 122 based on the available pre-trained generative AI models in model library 140.

User gaming systems 145 illustrate that many users may use different gaming systems including consoles, displays, and speakers similar to console 110, display 115, and speakers 112 to interact with gaming service 135. User gaming systems 145 may include other types of systems including handheld systems in which display 115, console 110, and speakers 112 are all integrated into a single, handheld device.

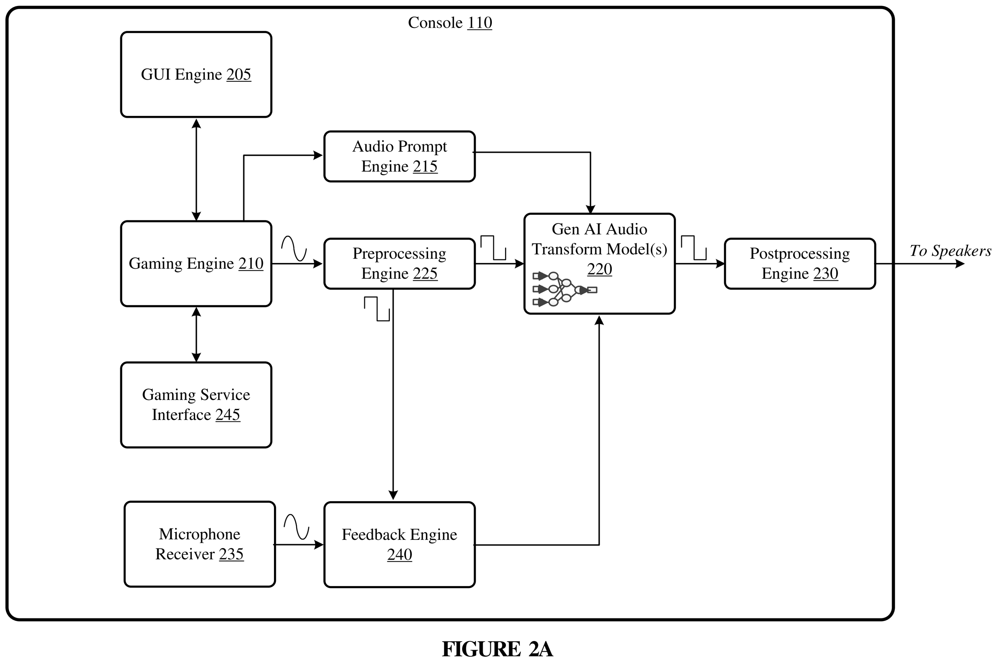

**FIG. 2A** illustrates additional details of console 110. The functionality described in console 110 may be performed anywhere the operating system of the gaming device executes. For example, in personal computer (PC) gaming, the user's personal computer may execute the gaming operating system rather than a specific use device like console 110. Additionally, in cloud-based gaming, the user's gaming operating system may execute in the cloud rather than on a local device. In any implementation, the functionality may be performed substantially similarly.

Console 110 includes graphical user interface (GUI) engine 205, gaming engine 210, audio prompt engine 215, generative AI model 220, preprocessing engine 225, postprocessing engine 230, microphone receiver 235, feedback engine 240, and gaming service interface 245.

GUI engine 205 generates the visual user interfaces shown in gaming interface 120 including audio settings 122. The user may interact via GUI engine 205 to make selections and provide user preferences for the dynamic audio manipulation technology disclosed herein.

Gaming engine 210 executes the digital games user 105 plays on console 110. Gaming engine 210 executes the digital games, which produce a dynamic audio stream. Gaming engine 210 interfaces with GUI engine 205 to provide the visual aspect of gaming instances when gaming engine 210 executes a digital game. Gaming engine 210 interfaces with gaming service interface 245 to provide functionality provided by gaming service 135. For example, gaming service interface 245 may be used to authenticate user 105, provide pre-trained generative AI models from model library 140, and the like.

Audio prompt engine 215 generates a prompt for each generative AI audio transform model 220 used for transforming sound classes as requested by user 105. For example, the prompt may be designed to instruct generative AI audio transform model 220 to identify each instance of the particular sound class and transform the instance with the requested transformation type. As indicated in the example in audio settings 122 of FIG. 1, the prompt may be, for example, "process the audio stream to replace each instance of a gunshot with the chirp.mp3 audio clip." Audio prompt engine 215 may obtain the user selections for designing the prompts from gaming engine 210. In some embodiments, audio prompt engine 215 is incorporated into gaming engine 210. In some embodiments, multiple generative AI models 220 may be stacked to transform more than one sound class in the dynamic audio stream for a gaming instance. In such embodiments, the output of one generative AI audio transform model 220a may be fed into the next generative AI audio transform model 220b so that every sound class elected is transformed before the audio is output to speakers 112.

Generative AI audio transform model 220 may include one or more generative AI models where each is trained to identify a particular sound class. In some embodiments, generative AI audio transform model 220 is also trained to perform a particular transformation. For example, one generative AI audio transform model may be trained to identify gunshots and replace the gunshot sounds with another sound, and another generative AI audio transform model may be trained to identify gunshots and remove the gunshot sounds. Generative AI audio transform model 220 may be selected from model library 140 based on user 105 selections in audio settings 122. In some embodiments, generative AI audio transform model 220 is tuned for user 105 based on feedback and stored in the user profile for user 105 in user account data 150. Generative AI audio transform model 220 may process the dynamic audio stream after conversion to digital segments. In some embodiments, it may require more than one digital segment to identify an instance of a sound class. Accordingly, generative AI audio transform model 220 may introduce some delay into the audio stream in an inconsistent manner between digital segments. However, generative AI audio transform model 220 may be trained to provide a consistent output. In other words, generative AI audio transform model 220 may be trained to output digital segments of transformed audio at a transmission rate matching the transmission rate of the dynamic audio stream from gaming engine 210.

Preprocessing engine 225 may optionally preprocess the dynamic audio stream from gaming engine 210. Preprocessing engine 225 may, for example, transform the dynamic audio stream from an analog stream to digital segments. The size of the digital segments may be selected based on a desired thoroughness. As the size of the digital segment increases, the speed at which generative AI audio transform model 220 can transform the instances of the sound classes increases, but as the size of the digital segment increases, the less accurate the transformations become. In other words, generative AI audio transform model 220 may miss instances of the sound class as the speed increases. Preprocessing engine 225 may also be responsible for determining the transmission rate of the dynamic audio stream and communicate the transmission rate information with the digital segments so that generative AI audio transform model 220 or postprocessing engine 230 may ensure the output audio transmission rate matches the transmission rate of the dynamic audio stream. In some embodiments, preprocessing engine 225 may create the digital segments such that adjacent segments may overlap to facilitate stitching the output together to generate a smooth, continuous audio stream.

Postprocessing engine 230 may optionally postprocess the output from generative AI audio transform model 220. For example, postprocessing engine 230 may convert the digital segments into an analog audio signal. As another example, postprocessing engine 230 may smooth the transmission rate of the output to match the transmission rate of the dynamic audio stream.

Microphone receiver 235 may receive voice commands from user 105. Microphone receiver 235 may include any microphone that may be standalone, built into a headset, built into console 110, or the like. User 105 may provide feedback during a gaming instance by verbally indicating, for example, that an instance of a sound class was missed in the audio output to speakers 112. Other types of feedback may also be provided including, for example, indicating that the output speed is too slow, too fast, or too rough.

Feedback engine 240 may process the feedback received via microphone receiver 235. For example, feedback engine 240 may include a natural language processor that translates the verbal indications from user 105 into actionable items. Feedback engine 240 may further receive the output from preprocessing engine 225 so that it has the digital segments available for use in handling the feedback. For example, if a user says, "I just heard a gunshot," feedback engine 240 may be able to correlate one or more digital segments with the indication. Based on the indication, feedback engine 240 may fine-tune the generative AI audio transform model 220. For example, feedback engine 240 may generate a prompt designed to instruct generative AI audio transform model 220 to add the identified sound to the sound class for future identification. The prompt may be, for example, "This digital segment includes a gunshot. Identify future instances of this sound as well." This type of prompt may help generative AI audio transform model 220 learn additional sound signatures for inclusion in the sound class. In some embodiments, feedback engine 240 may instead train a copy of generative AI audio transform model 220 to fine tune it, which can replace the generative AI audio transform model 220 once fine tuning is complete. In some embodiments, the information may be sent to gaming service 135 to perform the training.

Gaming service interface 245 may be used to interface and communicate with gaming service 135.

In use, user 105 may make selections for audio transformations using audio settings 122. Audio settings 122 may be received by console 110 via GUI engine 205. GUI engine 205 may communicate the user selections to gaming engine 210. Gaming engine 210 may provide the user selections to gaming service interface 245 to obtain the appropriate generative AI audio transform models 220 to handle the user selections. Generative AI audio transform models 220 are saved in console 110. User 105 may make selections to start a digital game, and gaming engine 210 may, in response, instantiate a gaming instance of the selected digital game. Gaming engine 210 may send audio prompt engine 215 an initiate signal, and audio prompt engine 215 may generate a prompt for generative AI audio transform model 220 to transform instances of the sound class with the transformation type as indicated in the user selections. Gaming engine 210 may issue the dynamic audio stream to preprocessing engine 225 for preprocessing. The output of preprocessing engine 225 is fed into generative AI audio transform model 220, which identifies the selected sound class and transforms the instances of the sound class with the selected transformation type. The output of generative AI audio transform model 220 is postprocessed by postprocessing engine 230 and output to speakers 112. During gameplay, user 105 may provide verbal feedback via microphone receiver 235. Feedback engine 240 processes the feedback and issues prompts to generative AI audio transform model 220 for fine-tuning. The fine-tuned generative AI audio transform model 220 may be transmitted to gaming service 135 via gaming service interface 245 for saving to the user's profile.

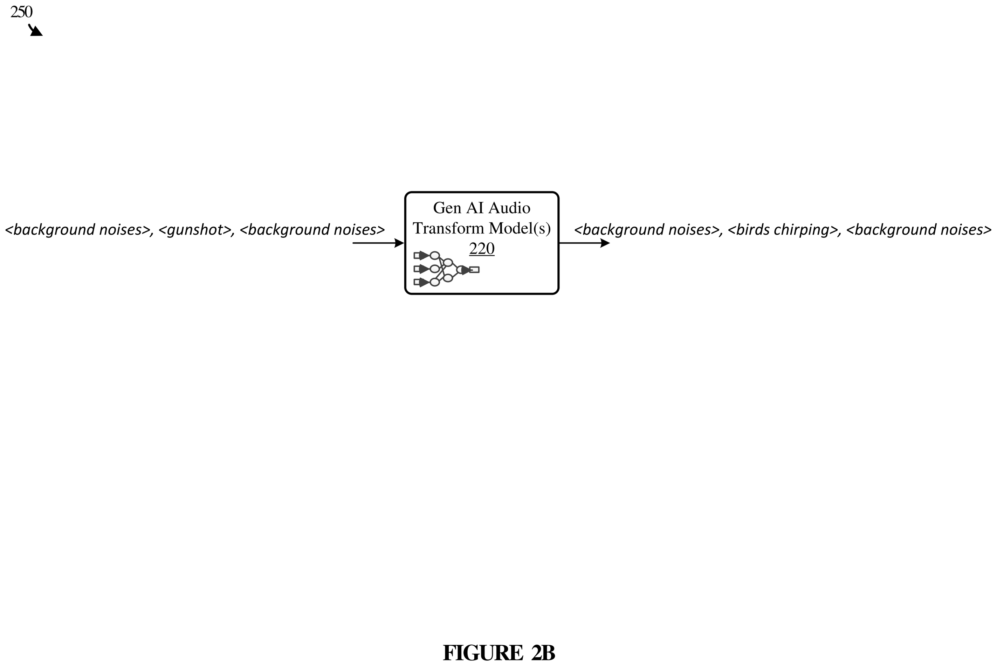

**FIG. 2B** illustrates an example transformation based on the selections indicated in FIG. 1. Generative AI audio transform model 220 is trained to identify instances of gunshots in the dynamic audio stream and replace the instances with a replacement sound. In this case, user 105 provided "chirp.mp3," which may be an audio clip of birds chirping. Generative AI audio transform model 220 may, based on the prompt from audio prompt engine 215, transform instances of gunshots with the sound in the provided audio file. In some embodiments, "chirp.mp3" may be transformed to an appropriate length digital signal by preprocessing engine 225 or by generative AI audio transform model 220. Accordingly, generative AI audio transform model 220 may receive digital segments including background noises, followed by a gunshot, followed by more background noises. Generative AI audio transform model 220 transforms the gunshot instance with bird chirping in the output. In some embodiments, if the replacement audio clip is too long, only a portion of the audio clip may be used. In some embodiments, if the replacement audio clip is too short, it may be looped to provide continuous audio for a duration that matches the duration of the replaced audio.

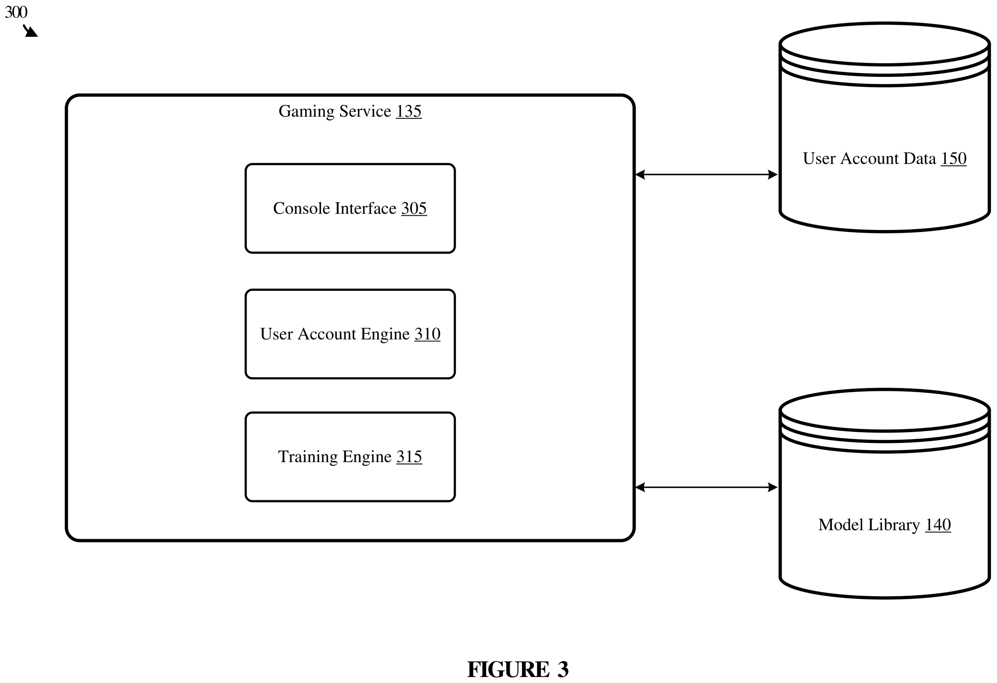

**FIG.** 3 illustrates the cloud-based portion 300 of gaming environment 100. The cloud-based portion 300 includes gaming service 135, user account data 150, and model library 140. The cloud-based portion 300 may include more components and functionality than depicted in FIG. 3, which is limited to relevant portions for clarity. For example, cloud-based portion 300 may include a digital games store of downloadable digital games and content.

Model library 140 may include pre-trained generative AI audio transformation models (e.g., generative AI audio transform model 220). Model library 140 may further include base training data for training new models. For example, the base training data may include audio data from gaming instances.

User account data 150 may include user profile information for each user, including user 105, which has a gaming service 135 login. User profile information may include user preference settings, selections from audio settings 122, downloaded digital games, purchased services, copies of generative AI audio transformation models fine-tuned for the user, and the like.

Gaming service 135 includes console interface 305, user account engine 310, and training engine 315. Gaming service 135 may include additional functionality and components not depicted here for simplicity and clarity.

Console interface 305 provides functionality for communication between console 110 and gaming service 135. More specifically, gaming service interface 245 communicates with console interface 305. Console interface 305 may be used to receive information from console 110 (or any other of user gaming systems 145) and transmit information to console 110 (or any other user gaming system 145). For example, once a model in model library 140 is identified for user 105 based on selections in audio settings 122, gaming service 135 may transmit the selected model to console 110 via console interface 305.

User account engine 310 may be used to authenticate users including user 105 when the user logs into a console, such as console 110. User account engine 310 may obtain user profile information from user account data 150 for authentication as well as providing data from user account data 150. User account engine 310 may further update the user profile data in user account data 150. For example, user account engine 310 may store updated user-tuned generative AI audio transformation models associated with a given user account into that user's user profile data in user account data 150.

Training engine 315 may include functionality to train a generative AI audio transformation model (e.g., generative AI audio transformation model 220. In some embodiments, the pre-trained generative AI audio transformation models are trained by training engine 315. The models are trained using gaming audio files as a basis and are trained to identify specific sound classes at least in part by providing positive samples of the sound class as well as negative samples to the model and using backpropagation based on whether the model identified the sound class correctly or not. The generative AI audio transformation models may include or be thought of to include a classification model and a transformation model, among other elements. The classification model is used to determine whether the audio segment includes the sound class or not, and when a segment or portion of an audio segment is classified as the sound class, the classification model indicates so. The transformation model modifies the classified instances of the sound class based on the transformation type. For example, in some embodiments, the transformation type is a removal type. In that example, the transformation model removes the identified instance of the sound class and blurs the remaining audible portions to cover the removal. For example, it may extend background noise occurring in portions of the audio segment for the duration of the removed portion. In a replacement transformation, the transformation model may remove the unwanted instance of the sound class and fill in the duration with a replacement audio clip. Further, the transformation model may blend the edges of the inserted audio clip to smooth the transitions. For enhancement transformation types, the transformation model may increase the frequency or volume of the sound class instance. For isolation transformation types, the transformation model may reduce the frequency or volume of other sounds occurring before, during, and after the instance of the sound class.

Training engine 315 may train user-specific generative AI audio transformation models using instances of a sound class provided by the user. A base model may be obtained from model library 140 when a new model is desired. The base model may be trained by training engine 315 using negative samples obtained from model library 140 and the positive samples provided by user 105. Once trained, training engine 315 provides the user-trained generative AI audio transformation model to console 110 via console interface 305. Training engine 315 also saves the trained model to the user's profile in user account data 150 via user account engine 310.

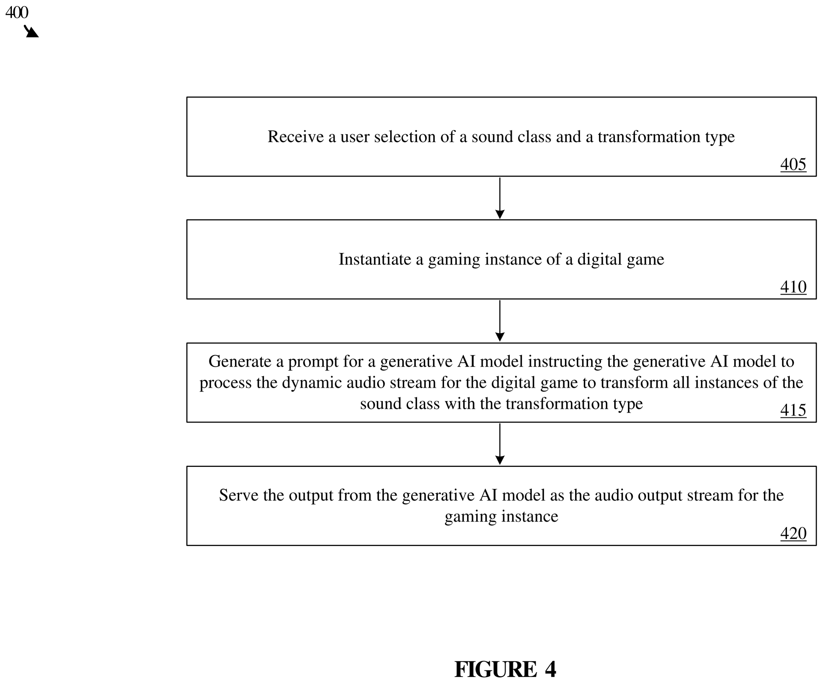

**FIG. 4** illustrates a method 400 of transforming dynamic audio with a pre-trained generative AI audio transformation model. Method 400 may be performed by console 110 in some embodiments. In some embodiments, method 400 may be performed by any device hosting the gaming operating system, which may be cloud-based. Method 400 begins at step 405 with receiving a user selection of a sound class and a transformation type. For example, user 105 may select a sound class using sound class dropdown 126 and a transformation type using transformation type dropdown 128. The options available in the dropdown boxes may be created based on available pre-trained models in model library 140. Once selected, GUI engine 205 may provide the information to gaming engine 210. Gaming engine 210 may request the appropriate generative AI audio transformation model 220 from gaming service 135 via gaming service interface 245. Gaming service 135 receives the request via console interface 305 and obtains the relevant model from model library 140. Gaming service 135 provides the selected model to console 110 via console interface 305. Gaming service 135 may further store the selected model in the user profile in user account data 150.

At step 410, gaming engine 210 instantiates a gaming instance of a digital game. For example, user 105 may select a digital game to play. Upon receiving the selection of the digital game, gaming engine 210 sends a signal to audio prompt engine 215. The gaming instance generates a dynamic audio stream.

At step 415, audio prompt engine 215 generates a prompt for the selected model (e.g., generative AI audio transformation model 220) that instructs the model to transform all instances of the selected sound class with the transformation type. For example, the selections in FIG. 1 indicate that all gunshots (i.e., instances of the gunshot sound class) should be replaced (i.e., replacement transformation type) with the sound in chirp.mp3. Audio prompt engine 215 issues the prompt to generative AI audio transformation model 220.

At step 420, console 110 serves the output from the generative AI model as the output stream for the gaming instance. For example, the dynamic audio stream issuing from gaming engine 210 may be preprocessed by preprocessing engine 225. For example, the dynamic audio stream may be converted to digital segments. Generative AI audio transformation model 220 may transform the preprocessed audio from preprocessing engine 225 to transform all instances of the sound class as desired based on the prompt issued from audio prompt engine 215. Postprocessing engine 230 may perform postprocessing on the transformed audio, which may be digital segments output from generative AI audio transformation model 220. Postprocessing engine 230 may smooth or alter the transmission rate, stitch the digital segments together, convert the digital segments to an analog audio signal, and/or perform any other suitable postprocessing. The audio output from postprocessing engine 230 may be served as the audio for the gaming instance.

Note that the pre-trained models may not be quite sufficient for a given user. For example, the user may be more or less sensitive, such that the user may provide feedback, which is processed by feedback engine 240, which fine-tunes the model for the user. Once user-specific fine tuning is performed, the model may be saved for the user in user account data 150. Accordingly, two users that make the same initial selections may, over time, have substantially different models after user-specific fine tuning is performed.

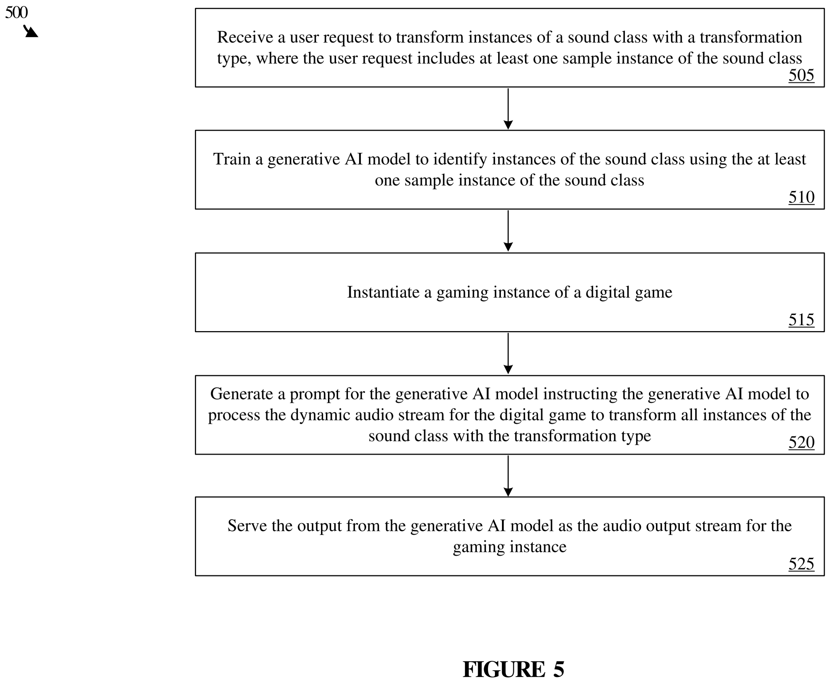

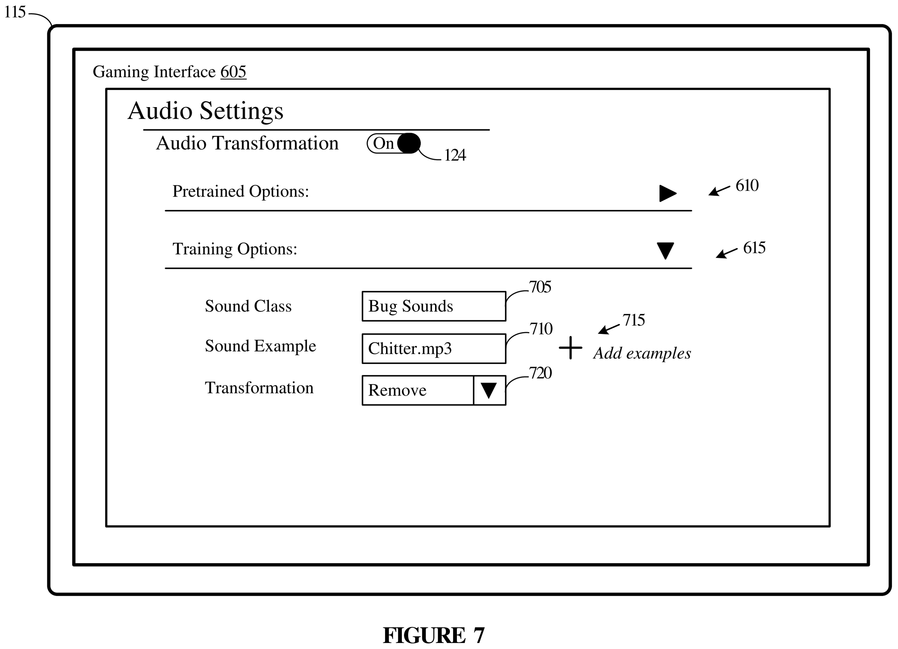

**FIG. 5** illustrates a method 500 of training a generative AI audio transformation model and transforming dynamic audio with the trained model. Method 500 may be performed by console 110 in some embodiments. In some embodiments, method 500 may be performed by any device hosting the gaming operating system, which may be cloud-based. In some embodiments, one or more portions of method 500 may be performed by console 110 and one or more portions may be performed by gaming service 135. Method 500 begins at step 505 with receiving a user request to transform instances of a sound class with a transformation type. The user request includes at least one sample instance of the sound class. For example, user 105 may name a sound class using sound class name box 705 described with respect to FIG. 7. User 105 may further provide one or more instances of the sound class in sound example box 710. In some embodiments, user 105 may further indicate a transformation type using transformation dropdown 720. Once selected, GUI engine 205 may provide the user selections to gaming engine 210. Gaming engine 210 may request gaming service 135 train a model using the information. In some embodiments, console 110 may include training engine 315.

At step 510 training engine 315 may train a generative AI audio transformation model based on the user selections. In some embodiments, training engine 315 obtains a base model and negative training samples from model library 140. Training engine 315 uses the negative samples and any samples provided by the user to train the model to a user-specifically trained dynamic audio transformation model (e.g., generative AI audio transformation model 220). For example, the selections in FIG. 7 request that training engine 315 train a user-specific model to remove all bug sounds from the dynamic audio stream. An audio clip named "chitter.mp3" is provided to provide a sample of the sound class the model should identify. When training engine 315 is on gaming service 135, gaming service 135 provides the trained model to console 110 via console interface 305. Gaming service 135 may further store the trained model in the user profile in user account data 150.

At step 515, gaming engine 210 instantiates a gaming instance of a digital game. For example, user 105 may select a digital game to play. Upon receiving the selection of the digital game, gaming engine 210 sends a signal to audio prompt engine 215. The gaming instance generates a dynamic audio stream.

At step 520, audio prompt engine 215 generates a prompt for the trained model (e.g., generative AI audio transformation model 220) that instructs the model to transform all instances of the selected sound class with the transformation type. For example, the selections in FIG. 7 indicate that all bug sounds (i.e., instances of the bugs sound class) should be removed (i.e., removal transformation type). Audio prompt engine 215 issues the prompt to generative AI audio transformation model 220.

At step 525, console 110 serves the output from the generative AI model as the output stream for the gaming instance. For example, the dynamic audio stream issuing from gaming engine 210 may be preprocessed by preprocessing engine 225. For example, the dynamic audio stream may be converted to digital segments. Generative AI audio transformation model 220 may transform the preprocessed audio from preprocessing engine 225 to transform all instances of the sound class as desired based on the prompt issued from audio prompt engine 215. Postprocessing engine 230 may perform postprocessing on the transformed audio, which may be digital segments output from generative AI audio transformation model 220. Postprocessing engine 230 may smooth or alter the transmission rate, stitch the digital segments together, convert the digital segments to an analog audio signal, and/or perform any other suitable postprocessing. The audio output from postprocessing engine 230 may be served as the audio for the gaming instance.

Note that initially, the newly trained generative AI audio transformation model 220 may not be very accurate if only a couple samples are provided by user 105. However, using feedback engine 240, the model becomes more finely tuned to accurately identify instances of the sound class, improving performance over time.

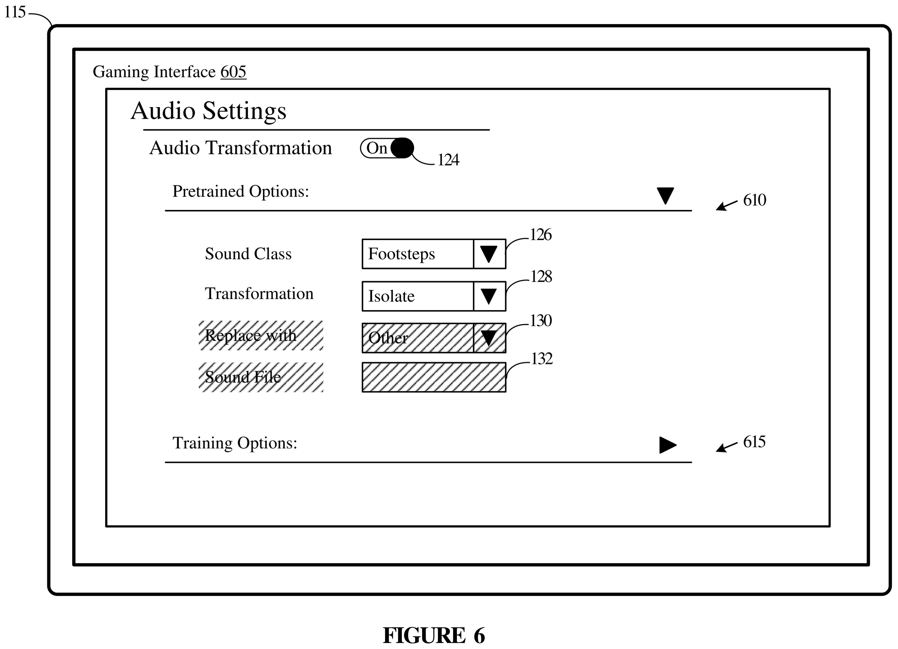

**FIG. 6** illustrates display 115 with gaming interface 605 depicting different audio settings than those illustrated in FIG. 1. In gaming interface 605, audio settings include pretrained options 610 and training options 615. Pretrained options 610 is expanded and shows the pretrained selections available, which include those shown in FIG. 1. In this example, sound class dropdown 126 has a selection of "footsteps," and transformation type dropdown 128 has "isolate" selected. Since isolation does not need replacement information, replacement dropdown 130 and sound file box 132 are greyed out. In this case, the user selections allow gaming service 135 to select a model from model library 140 that is trained to isolate instances of footsteps in a dynamic audio file.

**FIG. 7** illustrates gaming interface 605 with pretrained options 610 collapsed and training options 615 expanded. Training options 615 include options for a user to define a generative AI audio transformation model. The user may provide a name for the sound class in sound class box 705. The user may provide one or more samples of instances of the sound class in sound example box 710. The user can add more samples with addition element 715. The user can select a transformation type using transformation dropdown 720. Since only one or two samples may be insufficient to properly train a model, an option to listen to and select other examples of the sound class may be provided to the user. The user may select one or more of the examples. Based on the selection, training engine 315 may use a base model already trained on a sound class that includes the selected examples. In some cases, the sound example selected may be associated with a collection of positive training samples that are used in conjunction with a base model and the user provided samples to train the base model on the sound class. Further, even when the initial training is not well done, user feedback using feedback engine 240 may help fine-tune the trained model to more particularly identify the instances of the user-selected sound class.

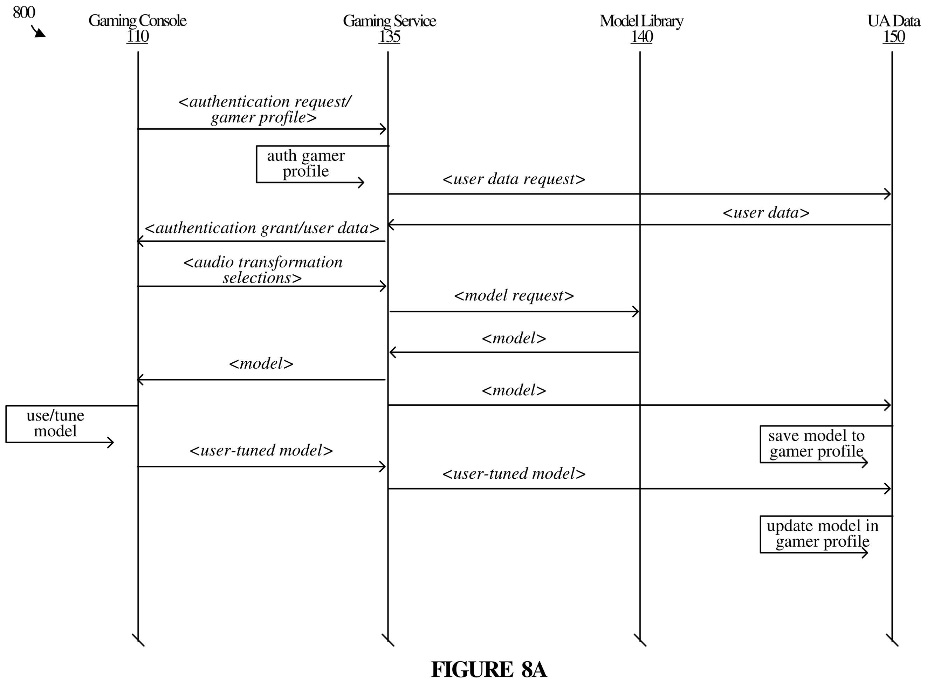

**FIG. 8A** illustrates a swim diagram 800 depicting data flow of using a pre-trained generative AI audio transformation model using gaming environment 100. User 105 provides credentials to console 110 to log into gaming service 135. The user authentication request is transmitted to gaming service 135, and gaming service 135 authenticates user 105. User 105 is associated with a gamer profile (i.e., user profile), and gaming service 135 accesses user account data 150 to obtain gamer profile information and provide it to console 110. User 105 selects audio transformation selections using, for example, audio settings 122 as shown in FIG. 1 or gaming interface 605 depicted in FIG. 6. Console 110 submits the audio transformation selections to gaming service 135, and gaming service 135 queries model library 140 for the pre-trained generative AI audio transformation model that satisfies the selections. Gaming service 135 provides the selected model to console 110 and saves it to the gamer profile in user account data 150. Console 110 tunes the model during use based on, for example, feedback engine 240. Console 110 then transmits the user-tuned model to gaming service 135 (e.g., once gameplay ends, periodically). Gaming service 135 replaces the saved model with the user-tuned model in gamer profile user account data 150.

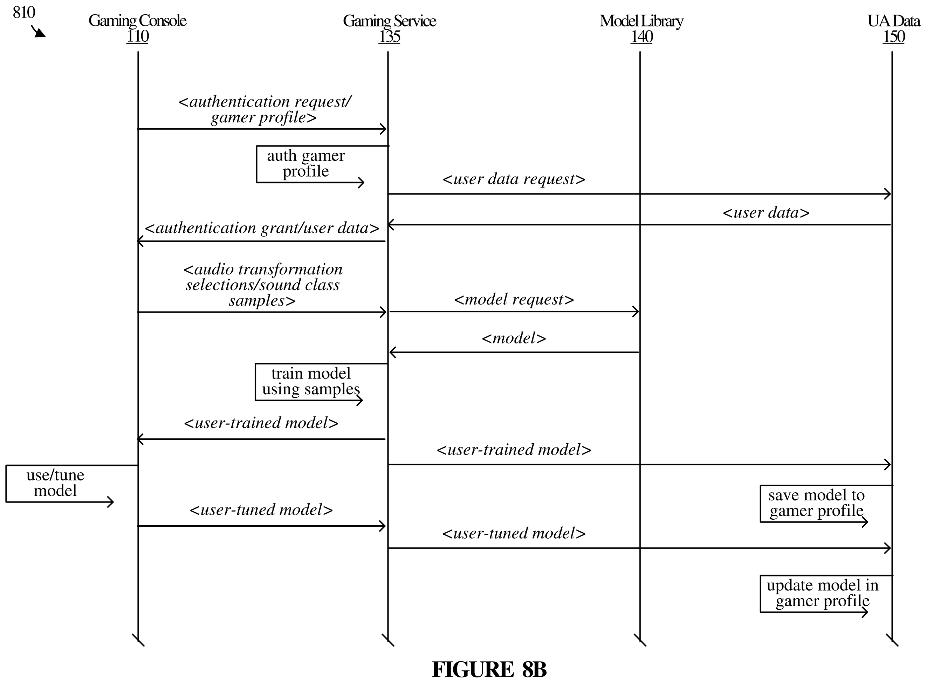

**FIG. 8B** illustrates a swim diagram 810 depicting data flow of training a generative AI audio transformation model using gaming environment 100. User 105 provides credentials to console 110 to log into gaming service 135. The user authentication request is transmitted to gaming service 135, and gaming service 135 authenticates user 105. User 105 is associated with a gamer profile (i.e., user profile), and gaming service 135 accesses user account data 150 to obtain gamer profile information and provide it to console 110. User 105 selects audio transformation selections using, for example, gaming interface 605 depicted in FIG. 7. Console 110 submits the audio transformation selections including the sound class name, sound class examples, and transformation type to gaming service 135, and gaming service 135 queries model library 140 for a base model to train (e.g., a base generative AI audio transformation model or model trained on samples including those selected by the user) and/or training data that satisfies the selections. Gaming service 135 (e.g., training engine 315) trains the base model using the training data from model library 140 and/or samples provided by the user. Gaming service provides the trained model to console 110 and saves it to the gamer profile in user account data 150. Console 110 tunes the model further during use based on, for example, feedback engine 240. Console 110 then transmits the user-tuned (e.g., fine-tuned) model to gaming service 135 (e.g., once gameplay ends, periodically). Gaming service 135 replaces the saved model with the user-tuned model in gamer profile user account data 150.

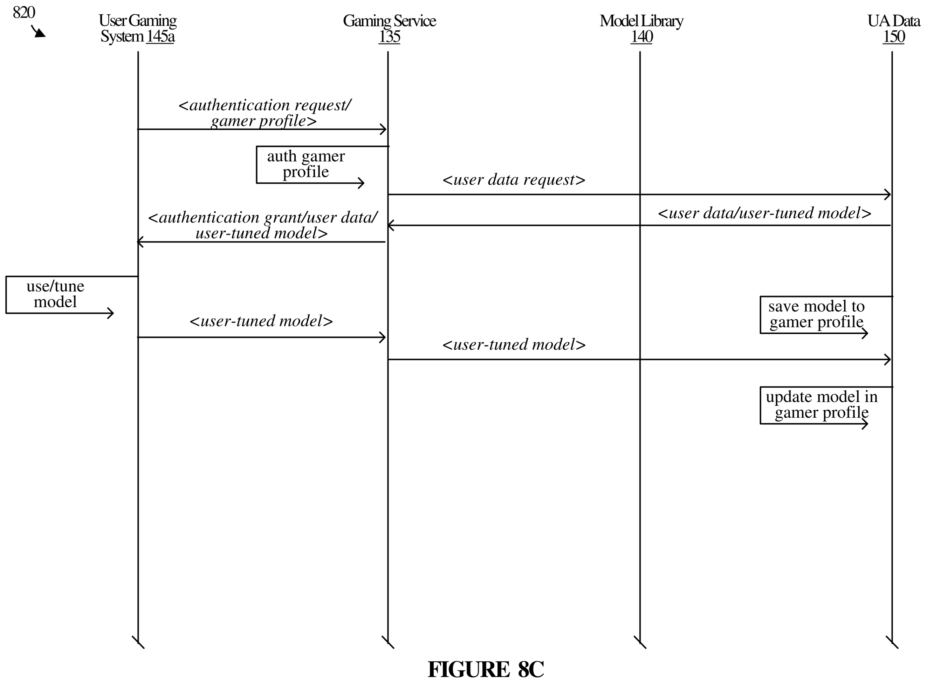

**FIG. 8C** illustrates a swim diagram 820 depicting data flow of a user logging onto a different gaming system and using audio transformation information stored in a globally accessible user account in gaming environment 100. For example, user 105 may use console 110 to initially select or train a model for audio transformations as shown in swim diagrams 800 and 810 and later log in to user gaming system 145a.

User 105 provides credentials to user gaming system 145a to log into gaming service 135. The user authentication request is transmitted to gaming service 135, and gaming service 135 authenticates user 105. User 105 is associated with a gamer profile (i.e., user profile), and gaming service 135 accesses user account data 150 to obtain gamer profile information and provide it to user gaming system 145a. The gamer profile information includes a saved model, which may be a pre-trained model, a user-specified model, or a user-tuned model tuned from either a pre-trained model or a user-specified model. User gaming system 145a tunes the model further during use based on, for example, feedback engine 240. User gaming system 145a then transmits the user-tuned (e.g., fine-tuned) model to gaming service 135 (e.g., once gameplay ends, periodically). Gaming service 135 replaces the saved model with the user-tuned model in gamer profile user account data 150.

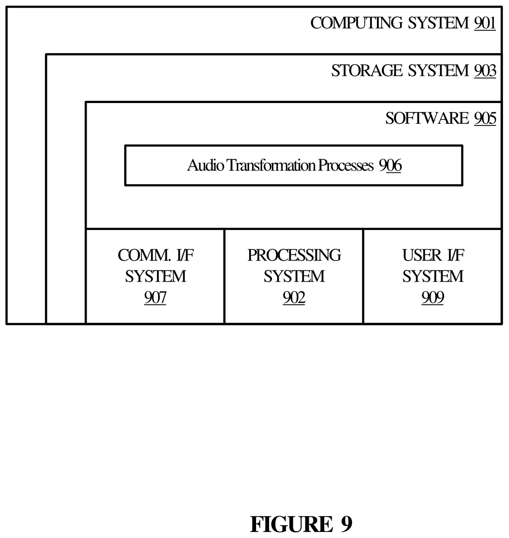

**FIG. 9** illustrates computing device 901 that is representative of any system or collection of systems in which the various processes, programs, services, and scenarios disclosed herein may be implemented. Examples of computing device 901 include, but are not limited to, desktop and laptop computers, tablet computers, mobile computers, and wearable devices. Examples may also include server computers, web servers, cloud computing platforms, and data center equipment, as well as any other type of physical or virtual server machine, container, and any variation or combination thereof. Accordingly, console 110 may be computing device 901. Further, servers executing instructions that support cloud-hosted services including gaming service 135 may be computing device 901.

Computing device 901 may be implemented as a single apparatus, system, or device or may be implemented in a distributed manner as multiple apparatuses, systems, or devices. Computing device 901 includes, but is not limited to, processing system 902, storage system 903, software 905, communication interface system 907, and user interface system 909 (optional). Processing system 902 is operatively coupled with storage system 903, communication interface system 907, and user interface system 909.

Processing system 902 loads and executes software 905 from storage system 903. Software 905 includes and implements audio transformation processes 906, which is (are) representative of the audio transformation training and implementation discussed with respect to the preceding figures, such as methods 400 and 500. When executed by processing system 902, software 905 directs processing system 902 to operate as described herein for at least the various processes, operational scenarios, and sequences discussed in the foregoing implementations. Computing device 901 may optionally include additional devices, features, or functionality not discussed for purposes of brevity.

Referring still to FIG. 9, processing system 902 may comprise a microprocessor and other circuitry that retrieves and executes software 905 from storage system 903. Processing system 902 may be implemented within a single processing device but may also be distributed across multiple processing devices or sub-systems that cooperate in executing program instructions. Examples of processing system 902 include general purpose central processing units, graphical processing units, application specific processors, and logic devices, as well as any other type of processing device, combinations, or variations thereof.

Storage system 903 may comprise any computer readable storage media readable by processing system 902 and capable of storing software 905. Storage system 903 may include volatile and nonvolatile, removable and non-removable media implemented in any method or technology for storage of information, such as computer readable instructions, data structures, program modules, or other data. Examples of storage media include random access memory, read only memory, magnetic disks, optical disks, flash memory, virtual memory and non-virtual memory, magnetic cassettes, magnetic tape, magnetic disk storage or other magnetic storage devices, or any other suitable storage media. In no case is the computer readable storage media a propagated signal.

In addition to computer readable storage media, in some implementations storage system 903 may also include computer readable communication media over which at least some of software 905 may be communicated internally or externally. Storage system 903 may be implemented as a single storage device but may also be implemented across multiple storage devices or sub-systems co-located or distributed relative to each other. Storage system 903 may comprise additional elements, such as a controller, capable of communicating with processing system 902 or possibly other systems.

Software 905 (including audio transformation processes 906) may be implemented in program instructions and among other functions may, when executed by processing system 902, direct processing system 902 to operate as described with respect to the various operational scenarios, sequences, and processes illustrated herein. For example, software 905 may include program instructions for implementing an audio transformation process including training user defined models, and the like, as described herein.

In particular, the program instructions may include various components or modules that cooperate or otherwise interact to carry out the various processes and operational scenarios described herein. The various components or modules may be embodied in compiled or interpreted instructions, or in some other variation or combination of instructions. The various components or modules may be executed in a synchronous or asynchronous manner, serially or in parallel, in a single threaded environment or multi-threaded, or in accordance with any other suitable execution paradigm, variation, or combination thereof. Software 905 may include additional processes, programs, or components, such as operating system software, virtualization software, or other application software. Software 905 may also comprise firmware or some other form of machine-readable processing instructions executable by processing system 902.

In general, software 905 may, when loaded in to processing system 902 and executed, transform a suitable apparatus, system, or device (of which computing device 901 is representative) overall from a general-purpose computing system into a special-purpose computing system customized to support audio transformation processes in an optimized manner. Indeed, encoding software 905 on storage system 903 may transform the physical structure of storage system 903. The specific transformation of the physical structure may depend on various factors in different implementations of this description. Examples of such factors may include, but are not limited to, the technology used to implement the storage media of storage system 903 and whether the computer-storage media are characterized as primary or secondary storage, as well as other factors.

For example, if the computer readable storage media are implemented as semiconductor-based memory, software 905 may transform the physical state of the semiconductor memory when the program instructions are encoded therein, such as by transforming the state of transistors, capacitors, or other discrete circuit elements constituting the semiconductor memory. A similar transformation may occur with respect to magnetic or optical media. Other transformations of physical media are possible without departing from the scope of the present description, with the foregoing examples provided only to facilitate the present discussion.

Communication interface system 907 may include communication connections and devices that allow for communication with other computing systems (not shown) over communication networks (not shown). Examples of connections and devices that together allow for inter-system communication may include network interface cards, antennas, power amplifiers, RF circuitry, transceivers, and other communication circuitry. The connections and devices may communicate over communication media to exchange communications with other computing systems or networks of systems, such as metal, glass, air, or any other suitable communication media. The aforementioned media, connections, and devices are well known and need not be discussed at length here.

Communication between computing device 901 and other computing systems (not shown), may occur over a communication network or networks and in accordance with various communication protocols, combinations of protocols, or variations thereof. Examples include intranets, internets, the Internet, local area networks, wide area networks, wireless networks, wired networks, virtual networks, software defined networks, data center buses and backplanes, or any other type of network, combination of network, or variation thereof. The aforementioned communication networks and protocols are well known and need not be discussed at length here.

As will be appreciated by one skilled in the art, aspects of the present invention may be embodied as a system, method, or computer program product. Accordingly, aspects of the present invention may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, aspects of the present invention may take the form of a computer program product embodied in one or more computer readable medium(s) having computer readable program code embodied thereon.

In some embodiments, a computer-implemented method, comprises: receiving, at a gaming device, a user request to transform a sound class with a transformation type, wherein the user request includes the transformation type, and at least one sample instance of the sound class, and wherein the user request applies to all gaming instances instantiated by the gaming device; training a generative artificial intelligence (AI) model to identify instances of the sound class using the at least one sample instance of the sound class;
instantiating, by the gaming device, a gaming instance of a digital game, wherein the gaming instance comprises a dynamic audio stream; generating, based on the user request and in response to the instantiating, a prompt for the generative AI model, wherein the prompt is designed to instruct the generative AI model to process the dynamic audio stream to transform the instances of the sound class in the dynamic audio stream with the transformation type; and serving, by the gaming device, an output stream from the generative AI model as the audio for the gaming instance.

In some embodiments, the computer-implemented method further comprises: receiving indications of missed instances of the sound class in the audio from a user during the gaming instance; and fine-tuning the generative AI model based on the indications.

In some embodiments, the transformation type comprises one of: a replacement transformation such that the generative AI model replaces the instances of the sound class in the dynamic audio stream with a different sound; an enhancement transformation such that the generative AI model increases a strength of the instances of the sound class in the dynamic audio stream; an isolation transformation such that the generative AI model isolates the instances of the sound class in the dynamic audio stream from other sounds in the dynamic audio stream; and a removal transformation such that the generative AI model removes the instances of the sound class from the dynamic audio stream.

In some embodiments, the computer-implemented further comprises saving the generative AI model to a globally accessible user account; instantiating, by a second gaming device, a second gaming instance of a second digital game, wherein the second gaming instance comprises a second dynamic audio stream and the globally accessible user account is logged in to the second gaming device; generating, based on the user request and in response to the instantiating the second gaming instance, a second prompt for the generative AI model, wherein the second prompt is designed to instruct the generative AI model to process the second dynamic audio stream to transform instances of the sound class in the second dynamic audio stream with the transformation type; and serving, by the second gaming device, a second output stream from the generative AI model as the audio for the second gaming instance.

In some embodiments, the computer-implemented method further comprises digitizing the dynamic audio stream into digitized segments; and providing the digitized segments to the generative AI model for processing based on the prompt.

In some embodiments, the computer-implemented method further comprises: receiving an indication of feedback from a user during the gaming instance, wherein the feedback indicates an issue in the output stream associated with at least one digitized segment of the digitized segments; and generating, based on the feedback, a second prompt for the generative AI model, wherein the second prompt is designed to instruct the generative AI model to adjust the output stream based on the feedback, and wherein the prompt identifies the at least one digitized segment.

In some embodiments, the computer-implemented method further comprises: receiving a second user selection of a thoroughness value, wherein a size of the digitized segments is selected based at least in part on the thoroughness value.

In some embodiments, the generative AI model is trained to deliver the output stream at a consistent rate in relation to the dynamic audio stream.

In some embodiments, the computer-implemented method further comprises: postprocessing the output stream to smooth a transmission rate of the output stream to match a transmission rate of the dynamic audio stream.

In some embodiments, the generative AI model is a first generative AI model of a plurality of generative AI models; each generative AI model of the plurality of generative AI models is trained to identify a unique sound class of a plurality of sound classes; and the method further comprising: receiving, at the gaming device, a second user selection of a second sound class and a second transformation type, generating, based on the second user selection and in response to the instantiating, a second prompt for a second generative AI model of the plurality of generative AI models, wherein the prompt is designed to instruct the second generative AI model to process the dynamic audio stream to transform instances of the second sound class in the dynamic audio stream with the second transformation type, and wherein the second generative AI model is pretrained to identify the instances of the second sound class, and providing a second output stream from the second generative AI model to the first generative AI model as the dynamic audio stream.

In some embodiments, the computer-implemented method further comprises: receiving, at the gaming device, a second user request to transform a second sound class with a second transformation type, wherein the second user request includes the second transformation type, and at least one sample instance of the second sound class; training a second generative AI model to identify instances of the second sound class using the at least one sample instance of the second sound class; instantiating, by the gaming device, a second gaming instance of a digital game, wherein the second gaming instance comprises a second dynamic audio stream; generating, based on the user request and in response to the instantiating, a second prompt for the generative AI model, wherein the second prompt is designed to instruct the generative AI model to process the second dynamic audio stream to transform the instances of the sound class in the dynamic audio stream with the transformation type; generating, based on the second user request and in response to the instantiating, a third prompt for the second generative AI model, wherein the third prompt is designed to instruct the second generative AI model to process an output of the generative AI model to transform the instances of the second sound class in the output of the generative AI model with the second transformation type; and serving, by the gaming device, an output stream from the second generative AI model as the audio for the second gaming instance.

In some embodiments, a gaming system, comprises a user interface component configured to: receive a user request to transform a sound class with a transformation type, wherein the user request includes the transformation type, and at least one sample instance of the sound class, and wherein the user request applies to all gaming instances instantiated by the gaming system associated with a user account of a user associated with the user request; a training component configured to: train a generative artificial intelligence (AI) model to identify instances of the sound class using the at least one sample instance of the sound class; and a gaming component configured to: instantiate a gaming instance of a digital game based on a user instruction received via the user interface component, wherein the gaming instance comprises a dynamic audio stream, in response to the user instruction, generate a prompt for the generative AI model, wherein the prompt is designed to instruct the generative AI model to process the dynamic audio stream to transform the instances of the sound class in the dynamic audio stream with the transformation type, and serve an output stream from the generative AI model as the audio for the gaming instance.

In some embodiments, the gaming system further comprises: a feedback component configured to: receive indications of missed instances of the sound class in the audio from a user during the gaming instance; and wherein the training component is further configured to: fine-tune the generative AI model based on the indications.

In some embodiments, the transformation type comprises one of: a replacement transformation such that the generative AI model replaces the instances of the sound class in the dynamic audio stream with a different sound; an enhancement transformation such that the generative AI model increases a strength of the instances of the sound class in the dynamic audio stream; an isolation transformation such that the generative AI model isolates the instances of the sound class in the dynamic audio stream from other sounds in the dynamic audio stream; and a removal transformation such that the generative AI model removes the instances of the sound class from the dynamic audio stream.

In some embodiments, the user interface component is further configured to: save the generative AI model to a globally accessible user account.

In some embodiments, the gaming component is further configured to: digitize the dynamic audio stream into digitized segments; and provide the digitized segments to the generative AI model for processing based on the prompt.

In some embodiments, the gaming system, further comprises: a feedback component configured to: receive an indication of feedback from a user during the gaming instance, wherein the feedback indicates an issue in the output stream associated with at least one digitized segment of the digitized segments; and generate, based on the feedback, a second prompt for the generative AI model, wherein the second prompt is designed to instruct the generative AI model to adjust the output stream based on the feedback, and wherein the prompt identifies the at least one digitized segment.

In some embodiments, the user interface component is further configured to: receive a second user selection of a thoroughness value; and the gaming component is further configured to: select a size of the digitized segments based at least in part on the thoroughness value.

In some embodiments, the gaming component is further configured to: postprocess the output stream to smooth a transmission rate of the output stream to match a transmission rate of the dynamic audio stream.

In some embodiments, the gaming system further comprises: a library of pretrained generative artificial intelligence (AI) models, wherein each pretrained generative AI model is trained to identify instances of a particular sound class of a plurality of sound classes; and wherein: the user interface component is further configured to: receive a second user selection of a second sound class of the plurality of sound classes and a second transformation type; and the gaming component is further configured to: identify, based on the second user selection, a first pretrained generative AI model from the library of pretrained generative AI models, in response to the user instruction, generate a second prompt for the firstpretrained generative AI model, wherein the prompt is designed to instruct the first pretrained generative AI model to process the dynamic audio stream to transform instances of the second sound class in the dynamic audio stream with the second transformation type, and provide a second output stream from the first pretrained generative AI model to the generative AI model as the dynamic audio stream.

Technology is disclosed for adapting a dynamic audio stream to modify sounds of a sound class based on user preferences in systems including gaming systems. A user may provide, via a graphical user interface, at least one sample instance of a sound class and a transformation type. The system may use the instances of the sound class to train a generative artificial intelligence (AI) model to identify instances of the sound class in a dynamic audio stream (e.g., from game instances on a gaming instance) and to transform the instances of the sound class with the transformation type in the dynamic audio stream. The output stream from the generative AI model can be used as the audio output. As the user hears other instances of the sound class in the output audio stream, the user can provide feedback to tune the generative AI model for the user-specific instances.

Indeed, the included descriptions and figures depict specific embodiments to teach those skilled in the art how to make and use the best mode. For the purpose of teaching inventive principles, some conventional aspects have been simplified or omitted. Those skilled in the art will appreciate variations from these embodiments that fall within the scope of the disclosure. Those skilled in the art will also appreciate that the features described above may be combined in various ways to form multiple embodiments. As a result, the invention is not limited to the specific embodiments described above, but only by the claims and their equivalents.

## Claims

1. A computer-implemented method, comprising:
receiving, at a gaming device, a user request to transform a sound class with a transformation type, wherein the user request includes the transformation type, and at least one sample instance of the sound class, and wherein the user request applies to all gaming instances instantiated by the gaming device;
training a generative artificial intelligence (AI) model to identify instances of the sound class using the at least one sample instance of the sound class;
instantiating, by the gaming device, a gaming instance of a digital game, wherein the gaming instance comprises a dynamic audio stream;
generating, based on the user request and in response to the instantiating, a prompt for the generative AI model, wherein the prompt is designed to instruct the generative AI model to process the dynamic audio stream to transform the instances of the sound class in the dynamic audio stream with the transformation type; and
serving, by the gaming device, an output stream from the generative AI model as the audio for the gaming instance.

2. The computer-implemented method of claim 1, further comprising:
receiving indications of missed instances of the sound class in the audio from a user during the gaming instance; and
fine-tuning the generative AI model based on the indications.

3. The computer-implemented method of claim 1 or 2, wherein the transformation type comprises one of:
a replacement transformation such that the generative AI model replaces the instances of the sound class in the dynamic audio stream with a different sound;
an enhancement transformation such that the generative AI model increases a strength of the instances of the sound class in the dynamic audio stream;
an isolation transformation such that the generative AI model isolates the instances of the sound class in the dynamic audio stream from other sounds in the dynamic audio stream; and
a removal transformation such that the generative AI model removes the instances of the sound class from the dynamic audio stream.

4. The computer-implemented method of any of claims 1-3, further comprising:
saving the generative AI model to a globally accessible user account;
instantiating, by a second gaming device, a second gaming instance of a second digital game, wherein the second gaming instance comprises a second dynamic audio stream and the globally accessible user account is logged in to the second gaming device;
generating, based on the user request and in response to the instantiating the second gaming instance, a second prompt for the generative AI model, wherein the second prompt is designed to instruct the generative AI model to process the second dynamic audio stream to transform instances of the sound class in the second dynamic audio stream with the transformation type; and
serving, by the second gaming device, a second output stream from the generative AI model as the audio for the second gaming instance.

5. The computer-implemented method of any of claims 1-4, further comprising:
digitizing the dynamic audio stream into digitized segments; and
providing the digitized segments to the generative AI model for processing based on the prompt.

6. The computer-implemented method of claim 5, further comprising:
receiving an indication of feedback from a user during the gaming instance, wherein the feedback indicates an issue in the output stream associated with at least one digitized segment of the digitized segments; and
generating, based on the feedback, a second prompt for the generative AI model, wherein the second prompt is designed to instruct the generative AI model to adjust the output stream based on the feedback, and wherein the prompt identifies the at least one digitized segment.

7. The computer-implemented method of claim 5, further comprising: receiving a second user selection of a thoroughness value, wherein a size of the digitized segments is selected based at least in part on the thoroughness value.

8. The computer-implemented method of any of claims 1-7, wherein the generative AI model is trained to deliver the output stream at a consistent rate in relation to the dynamic audio stream.

9. The computer-implemented method of any of claims 1-8, further comprising: postprocessing the output stream to smooth a transmission rate of the output stream to match a transmission rate of the dynamic audio stream.

10. The computer-implemented method of any of claims 1-9, wherein:
the generative AI model is a first generative AI model of a plurality of generative AI models;
each generative AI model of the plurality of generative AI models is trained to identify a unique sound class of a plurality of sound classes; and
the method further comprising:
receiving, at the gaming device, a second user selection of a second sound class and a second transformation type,
generating, based on the second user selection and in response to the instantiating, a second prompt for a second generative AI model of the plurality of generative AI models, wherein the prompt is designed to instruct the second generative AI model to process the dynamic audio stream to transform instances of the second sound class in the dynamic audio stream with the second transformation type, and wherein the second generative AI model is pretrained to identify the instances of the second sound class, and
providing a second output stream from the second generative AI model to the first generative AI model as the dynamic audio stream.

11. The computer-implemented method of any of claims 1-10, further comprising:
receiving, at the gaming device, a second user request to transform a second sound class with a second transformation type, wherein the second user request includes the second transformation type, and at least one sample instance of the second sound class;
training a second generative AI model to identify instances of the second sound class using the at least one sample instance of the second sound class;
instantiating, by the gaming device, a second gaming instance of a digital game, wherein the second gaming instance comprises a second dynamic audio stream;
generating, based on the user request and in response to the instantiating, a second prompt for the generative AI model, wherein the second prompt is designed to instruct the generative AI model to process the second dynamic audio stream to transform the instances of the sound class in the dynamic audio stream with the transformation type;
generating, based on the second user request and in response to the instantiating, a third prompt for the second generative AI model, wherein the third prompt is designed to instruct the second generative AI model to process an output of the generative AI model to transform the instances of the second sound class in the output of the generative AI model with the second transformation type; and
serving, by the gaming device, an output stream from the second generative AI model as the audio for the second gaming instance.

12. A gaming system, comprising:
a user interface component configured to:
receive a user request to transform a sound class with a transformation type,
wherein the user request includes the transformation type, and at least one sample instance of the sound class, and wherein the user request applies to all gaming instances instantiated by the gaming system associated with a user account of a user associated with the user request;
a training component configured to:
train a generative artificial intelligence (AI) model to identify instances of the sound class using the at least one sample instance of the sound class; and
a gaming component configured to:
instantiate a gaming instance of a digital game based on a user instruction received via the user interface component, wherein the gaming instance comprises a dynamic audio stream,
in response to the user instruction, generate a prompt for the generative AI model, wherein the prompt is designed to instruct the generative AI model to process the dynamic audio stream to transform the instances of the sound class in the dynamic audio stream with the transformation type, and
serve an output stream from the generative AI model as the audio for the gaming instance.

13. The gaming system of claim 12, further comprising:
a feedback component configured to:
receive indications of missed instances of the sound class in the audio from a user during the gaming instance; and
wherein the training component is further configured to:
fine-tune the generative AI model based on the indications.

14. The gaming system of claim 11 or 12, wherein the transformation type comprises one of:
a replacement transformation such that the generative AI model replaces the instances of the sound class in the dynamic audio stream with a different sound;
an enhancement transformation such that the generative AI model increases a strength of the instances of the sound class in the dynamic audio stream;
an isolation transformation such that the generative AI model isolates the instances of the sound class in the dynamic audio stream from other sounds in the dynamic audio stream; and
a removal transformation such that the generative AI model removes the instances of the sound class from the dynamic audio stream.

15. The gaming system of any of claims 12-14, wherein:
the user interface component is further configured to:
save the generative AI model to a globally accessible user account.
